Europäisches Patentamt

(19) European Patent Office    (11) Publication number:  **0 100 753**

Office européen des brevets                          **B1**

(12)                    **EUROPEAN PATENT SPECIFICATION**

(45) Date of publication of patent specification: 07.05.86    (51) Int. Cl.⁴: **H 02 J 7/04,** H 02 J 7/10,
                                                            H 04 N 5/44

(21) Application number: 83830137.2

(22) Date of filing: 06.07.83

(54) Battery charger.

(30) Priority: 08.07.82 IT 6786982

(43) Date of publication of application:
15.02.84 Bulletin 84/07

(45) Publication of the grant of the patent:
07.05.86 Bulletin 86/19

(84) Designated Contracting States:
DE FR GB NL

(56) References cited:
FR-A-2 146 247
FR-A-2 399 149
NL-A-8 006 508

FUNKSCHAU, vol. 44, no. 18, September 1972,
pages 661-663, München, DE. H.-J. PEITSCH:
"Nickel-Cadmium-Akkumulatoren in
Funksprechgeräten"

ELEKTOR, vol. 3, no. 7/8, July/August 1977,
page 23, Canterbury, GB H. KNOTE:
"Automatic NiCad charger"

(73) Proprietor: **Società Italiana per lo Sviluppo
dell'Elettronica S.I.SV.EL. S.p.A.**
**Via delle Quattro Fontane 20**
**I-00184 Roma (IT)**

(72) Inventor: **Belisomi, Pietro**
**Viale Rimembranza 50**
**I-10064 Pinerolo Torino (IT)**
Inventor: **Dini, Roberto**
**Via Malta 9**
**I-10098 Rivoli Torino (IT)**

(74) Representative: **Jacobacci, Filippo et al**
**c/o JACOBACCI-CASETTA & PERANI S.p.A. Via
Alfieri 17**
**I-10121 Torino (IT)**

## Description

The present invention relates to a device comprising electric circuits at least in part supplied by a rechargeable battery and including first means able to produce a substantially steady current to recharge the battery, second means enabling the first means to recharge the battery when the battery charge is lower than a first preset threshold and third means disabling the first means and thus stopping recharge when the battery charge is higher than a second preset threshold, thereby denoting a completed battery recharge.

Much of the electric equipment currently being used is powered either entirely or partly by d.c. current.

In the case of non-portable electrical equipment, i.e. equipment permanently used where it can be connected to an a.c. electricity mains, the problem is overcome by providing the equipment with suitable power units for converting 220 V a.c. current into d.c. current of the required voltage and power.

In the case of portable electrical equipment, however, i.e. television sets, radio-receivers, recorders, calculating machines, etc., which may be used where no electricity mains is available, or equipments (or parts thereof) which, though they may be operated from an electricity supply (e.g. remote controls), require frequent handling, in which case a supply cable would be awkward, the problem is overcome by providing the equipment with dry cells.

Particularly when the equipment is operated continually, however, these cells run down fairly rapidly and have to be replaced frequently at great expense to the user.

Furthermore, certain types of portable equipment, e.g. recorders, telecameras, etc., require a more or less constant supply voltage throughout the recording or filming operation to ensure good recording or filming quality, whereas dry cells do not maintain constant voltage during discharge.

All these problems are successfully overcome by using a rechargeable nickel-cadmium batteries which, besides providing for low running cost and greater working life, maintain a discharge voltage more constant than dry cells.

Rechargeable batteries, however, have to be recharged after they have run down, and can only be recharged a certain number of times and must be recharged very carefully if efficient operation and long life of the batteries are to be ensured.

Makers of nickel-cadmium batteries currently available on the market guarantee roughly 500 complete recharging operations and roughly twice this number of partial recharging operations provided the recharging operations are performed using steady current equivalent to roughly 1/10 of charge capacity and the batteries are not overcharged during the recharging operation.

The drawbacks of battery rechargers currently available on the market is that when and how long batteries are recharged is left to the discretion of the user who invariably either under- or overcharges them, either case resulting in improper use.

If overcharged, batteries may be damaged irreparably by leaking electrolyte, whereas undercharging reduces the operating time and working life of the batteries.

Also known (see NL-A-8 006 508 to A.J. Krjinen) is a device for recharging batteries capable of sensing two thresholds, one for the beginning and the other for the end of the charge, so as to supply a charge current only when the voltage of the battery to be recharged has reached the typical discharge value and stop the recharge only when the voltage of the battery has reached the typical charge end value.

Therefore such a device allows a correct charge of rechargeable batteries only in case they are never disconnected from the device, i.e. only in the case of rechargeable batteries used inside an equipment as a "back-up".

In fact if batteries have to be temporarily disconnected from the recharge circuit, according to the particular use of the device supplied by the batteries (remote control, portable computer, little household appliance, etc.), after a charging cycle usually lasting several hours has begun but not been completed the device described in the said Dutch patent application NL—A—8 006 508, when reconnected, cannot start recharging again because, at the moment of disconnection, the voltage reached will be higher than the discharge value and the charge will not start again till the voltage at the battery terminals does not fall below the typical value of a discharged battery.

Thus the recharge cycle has not been completed and one of the limited recharge cycles available has not been correctly used.

None of the known devices can memorise the charge status of the battery should it be disconnected during recharging and then reconnected to the charger.

The aim of the present invention is therefore to overcome these drawbacks by providing a battery charger designed to ensure complete recharging, i.e. which only commences recharging when the batteries are run-down and only stops when the batteries are fully charged, regardless of the initial charge of the batteries, how often the batteries are connected to or disconnected from the charger and how long they are kept connected (provided, of course, the total time does not exceed that required for recharging).

With these aims in view, the present invention relates to a device of the above-specified kind, characterised in that it comprises connection means allowing the battery to be connected to or disconnected from the first means and memory means arranged to memorise in case of a possible disconnection whether at the moment the battery is disconnected from the first means, the battery recharge was completed or not, and when the battery is reconnected to the device, to enable the first means if the battery recharge was not completed, even when, at the moment of reconnection, the battery charge is higher than said first preset threshold.

The invention will now be described with reference to the attached drawings, given only as an illustrative and a non-limiting example, in which:

Fig. 1 shows charging and discharging graphs of a rechargeable battery as a function of time;

Fig. 2 shows the electric circuit of a part of a first embodiment of the present invention;

Fig. 3 shows the electric circuit of a second embodiment of the present invention.

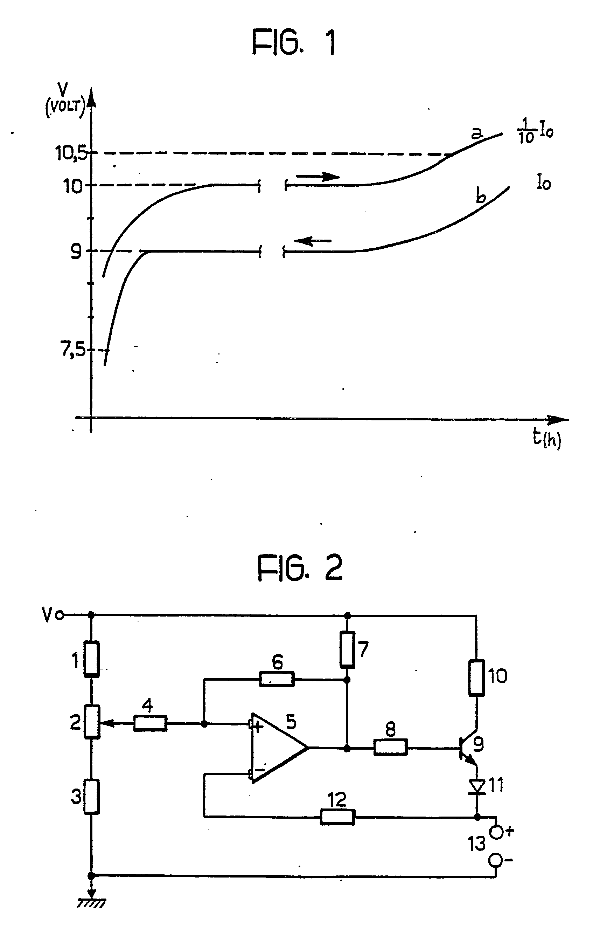

Referring to Fig. 1 shows the charging (a) and discharging (b) graphs of a rechargeable 9 V nickel-cadmium battery, the battery can be said to be fully charged over the 10.5 V mark and discharged below the 7.5 V mark, both of which thresholds can easily be determined to a good degree of accuracy.

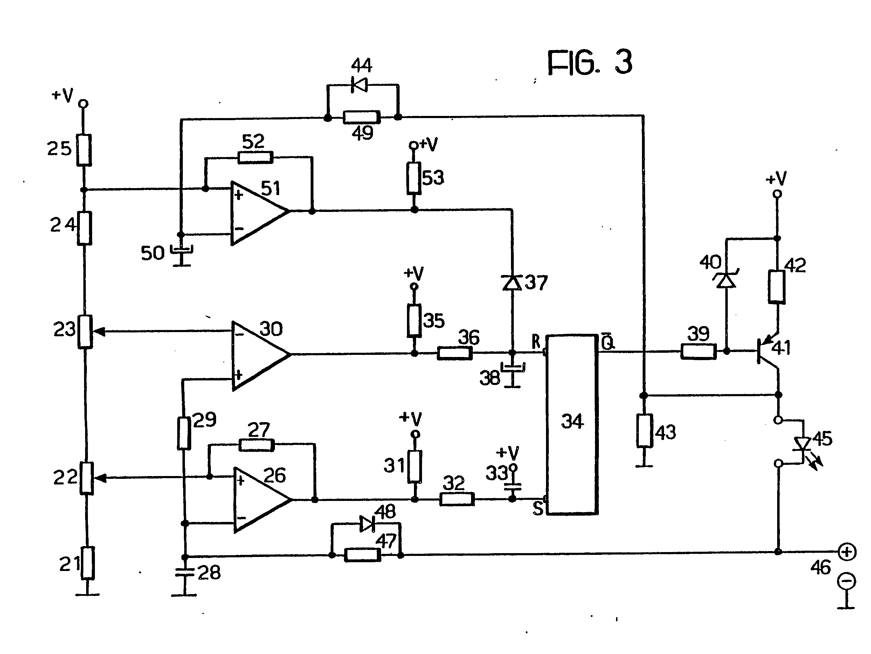

Fig. 2 shows the electric circuit of a part of a first embodiment of the present invention, comprising a resistor 1 with one terminal connected to a positive 18 V supply V and the other connected to a side terminal of potentiometer 2. The other side terminal of potentiometer 2 is connected to one end of resistor 3, the other end of which is grounded, and the middle terminal of the potentiometer is connected to one end of resistor 4.

The other end of resistor 4 is connected to the non-inverting input of a voltage threshold comparator 5 and to one end of resistor 6. The other end of resistor 6 is connected to the output of voltage comparator 5 and to one end of resistor 7, the other end of which is connected to supply V. The output of voltage comparator 5 is also connected to one end of resistor 8, the other end of which is connected to the base of NPN transistor 9. The collector of transistor 9 is connected to one end of resistor 10, the other end of which is connected to supply V, while the emitter is connected to the anode of the semiconductor diode 11. The cathode of diode 11 is connected to one end of resistor 12, the other end of which is connected to the inverting input of voltage comparator 5, and to a first terminal on terminal board 13 to which the positive pole of the rechargeable battery is connected. The second terminal on terminal board 13, to which the negative pole of the rechargeable battery is connected, is grounded.

For a clear understanding of how the charger works, it should first be pointed out that the resistor 10 is selected so that roughly 10—12 mA (the charge current recommended by the battery maker) flows through the branch rechargeable battery is connected to, that resistor 1 and 3 and potentiometer 2 are selected so that the reference voltage of the non-inverting terminal of voltage threshold comparator 5 is roughly 7.5 V and the resistor 4 and 6 are selected as to provide for 3 V hysteresis.

If the voltage of the battery connected to the charger is over 7.5 V, the output of voltage threshold comparator 5 is low, transistor 9 is disabled and no current flows into the battery to charge it.

If, on the other hand, its voltage is below 7.5 V, the output of voltage threshold comparator 5 is high, transistor 9 is saturated and charge current flows into the battery. At the same time, part of the output voltage is sent back to the non-inverting input of voltage threshold comparator 5 to raise its threshold to 10.5 V.

Current continues to flow into the battery which rises in voltage as it is charged. When the said voltage exceeds 10.5 V, the output of voltage threshold comparator 5 switches, transistor 9 is disabled and current is cut off to stop charging the battery which can thus be left connected to terminal board 13 for any length of time with no danger of being overcharged.

The described device be successfully connected to a control unit bearing a micro-processor. The control unit may be placed inside the device for carrying out other functions, with the task of checking the working conditions of the recharge device, memorise it and start the charge again in case the battery is taken off temporarily before the end of the recharge operation.

The aim of this operation is to carry out always complete recharge cycles, allowing to obtain the life of the batteries the longest possible.

In such a realization the control unit can receive a signal from the cathode of diode 11, from which it gets an information both about the working conditions during recharge or not, and about the connection of the battery to the positive and negative pin. Besides it can send a signal to the negative pin of threshold voltage comparator 5 which can eventually compel the comparator to recharge, quite apart from the value of the voltage at the battery ends, in case the battery is connected another time to the positive and negative pins after an interruption in a non completed recharge cycle.

In the example shown, a 9 V battery is charged but different voltage and/or capacities can be catered for by adjusting the values of resistor 1, 3, 4, 6 and 10, potentiometer 2 and the threshold of comparator 5.

In an alternative arrangement, provision can be made for a set of resistors 1, 3, 4, 6 and 10 and potentiometer 2 with a switch device for charging batteries of various voltages and/or capacities.

Fig. 1 Part list:

| | | |
|---|---|---|
| 1 Resistor | 1 KΩ | |
| 3 Resistor | 2 KΩ | |
| 4 Resistor | 33 KΩ | |
| 6 Resistor | 100 KΩ | |
| 7 Resistor | 10 KΩ | |
| 8 Resistor | 10 KΩ | |
| 10 Resistor | 1.5 KΩ | |
| 12 Resistor | 33 KΩ | |
| 2 Potentiometer | 1 KΩ | |
| 5 Voltage comparator | IC TAA 2761 | |
| 9 Transistor | BC 238 | |
| 11 Diode | 1N 4148 | |

Fig. 3 showing the electrical circuit of a second embodiment of the present invention shows a resistor 21 with one end connected to the circuit ground and the other to a side terminal of a first potentiometer 22 the other side terminal of which is connected to a side terminal of a second potentiometer 23, the other side terminal of which is connected to one end of resistor 24. The other end of the latter is connected to one end of resistor 25 the other end of which is connected to an 18 V positive d.c. supply V.

The middle terminal of first potentiometer 22 is connected to the non-inverting input of a first voltage threshold comparator with hysteresis 26 which is also connected to one end of resistor 27 the other end of which is connected to the output of the said voltage comparator 26.

The inverting output of first voltage comparator 26 is connected to the junction of condenser 28, the other end of which is grounded, and resistor 29, the other end of which is connected to the non-inverting input of a second voltage threshold comparator with hysteresis 30. The inverting input of second voltage comparator 30, on the other end, is connected to the middle terminal of second potentiometer 23. The output of first voltage comparator 26 is connected to one end of resistor 31, the other end of which is connected to supply V, and to one end of resistor 32. The other end of the latter is connected to one end of condenser 33, the other end of which is connected to supply V, and to the SET inputs of a SET-RESET flip-flop 34.

The output of second voltage comparator 30 is connected to one end of resistor 35, the other end of which is connected to supply V, and to one end of resistor 36. The other end of the latter is connected to the anode of semiconductor diode 37, to the positive terminal of electrolytic condenser 38, the negative terminal of which is grounded, and to the reset input R of flip-flop 34.

The complemented output Q̄ of flip-flop 34 is connected to one end of resistor 39, the other end of which is connected to the anode of Zener diode 40, and to the base of PNP transistor 41.

The cathode of Zener diode 40 is connected to supply V and to one end of resistor 42, the other end of which is connected to the emitter of transistor 41. The collector of the latter is connected to one end of resistor 43, the other end of which is grounded, to the anode of diode 44 and to the anode of LED 45.

The cathode of LED 45 is connected to a first terminal on terminal board 46 (to which the positive pole of the rechargeable battery is connected) the second terminal of which (for connecting the negative pole of the discharged battery) is grounded.

The first terminal on terminal board 46 is connected to one end of resistor 47 and to the cathode of diode 48. The other end of resistor 47 and the anode of diode 48 are connected together, to the inverting input of first voltage comparator 26.

The cathode of diode 44, connected parallel to resistor 49, is connected to the positive pole of electrolytic condenser 50, the negative pole of which is grounded, and to the inverting input of a third voltage threshold comparator with hysteresis 51.

The non inverting input of third comparator 51 is connected to the junction of resistors 24 and 25 and to one end of resistor 52, the other end of which is connected to the output of the same comparator 51.

The same output of third comparator 51 is connected to the cathode of diode 37 and to one end of resistor 53, the other end of which is connected to supply V.

For a clear understanding of how the circuit works, it should be pointed out that resistor 21, 24 and 25 and potentiometers 22 and 23 are selected so that (for a 9 V battery) the threshold on the first 26, second 30 and third 51 voltage comparators are 7.5 V 10.5 V and 13 V respectively and that resistors 36, 47 and 49 and condenser 38 and 50 are selected so that the trailing edges of the input voltage on third comparator 51 are steeper than those of the inputs of first and second comparators 26 and 30, so that the output pulses of third comparator 51 are supplied in advance of those on first and second comparators 26 and 30.

If the voltage of the battery connected to terminal board 46 is below 7.5 V, first comparator 26 switches its outputs (which was low) a SET signal is sent to flip-flop 34, the complemented outputs of which switches to low, and the current generator, consisting of resistors 39 and 42, Zener diode 40 and transistor 41, starts to supply current. The battery begins to charge and LED 45 lights up to show the user the battery is being charged.

Charging continued until the voltage on the battery reaches 10.5 V at which point the second comparator 30 switches its output to high, a RESET signal is sent to flip-flop 34, the complemented output of which switches to high, and transistor 41 cuts off supply to the battery which may thus be left connected for any length of time with no fear of being overcharged.

As the battery ages, it may take a long time for it to reach 10.5 V (shown by LED 45) so that it may prove useful to lower the second threshold slightly. For this purpose, potentiometer 23 may be made accessible to the user.

If, on the other hand, the voltage of the rechargeable battery connected to the charger is over 7.5 V, first comparator 26 does not switch its output, no SET pulse is sent to flip-flop 34 and the battery is not charged.

If, by any chance, the battery is disconnected from the terminal board 46 during the charge operation, the collector on transistor 41 switches immediately to supply voltage V which, via branch 44, 49, is sent to the inverting output of· third comparator 51 and, via branch 29, 47, to the non-inverting input of second comparator 30.

As already stated, the branch leading to third comparator 51 enables the pulses to travel faster than the one leading to second comparator 30 so that the output of third comparator 51 (usually high) switches to low before the output of second comparator 30 switches to high. In this way, the positive pulse on second comparator 30 is "detoured" through diode 37 and no RESET pulse is sent to flip-flop 34.

Having received no RESET pulse, the charger thus remains set for completing the charge on the battery when the latter is connected again to terminal board 46.

In other words, when the battery is disconnected from terminal board 46, the charger "remembers" whether it was fully charged or not and, in the event it was not, completes the charge regardless of how many times the battery has been connected or disconnected.

The means used in this case memorise voltage attainment but provision could equally well be made for a time memory, i.e. device which charges the battery for a set length of time either in one go or at separate intervals.

The device described could safely be fitted on a portable electronic set with the batteries left in permanently and would operate exactly as described. The only provision required would be to replace the volatile memory described with a non-volatile one which preserves the stored data when the appliance is disconnected from the mains and supply cut off to the circuit.

On the circuit described, condenser 33 sends a SET signal to flip-flop 34 to enable charging whenever the circuit is supplied so as to prevent random operation of the charger in the event of accidental power failure.

The present charger is particularly useful on remote-controlled television sets or audio equipment powered by rechargeable batteries.

In this case, the charger is placed inside the appliance which also has a compartment for the remote control and a terminal board which, together with plugs on the remote control, enables the batteries inside the remote control to be charged by the charger inside the television set whenever the remote control is inserted in the compartment.

As the remote control may be taken out·of the compartment before the battery has been fully charged, it is important to provide the charger with memory means.

As already shown with regard to the embodiment shown.in Fig. 2, the device with the above said type of operations can be achieved using programmed logic, e.g. using part of a microprocessor programme if the appliance the charger is fitted on already provides for one.

As shown in the Fig. 2 circuit, batteries with voltage and/or capacities other than those described may also be charged by adjusting the resistors determining charge threshold and current.

In yet another alternative arrangement, provision can be made for several sets of similar resistors with a switch for charging batteries with different voltages and/or capacities.

**0 100 753**

Fig. 3 Part List

| | | |
|---|---|---|
| 21 | Resistor | 820 Ω |
| 24 | Resistor | 220 Ω |
| 25 | Resistor | 560 Ω |
| 27,29,32,36,<br>43,47,49,52 | Resistor | 100 KΩ |
| 31,35,53 | Resistor | 10 KΩ |
| 39 | Resistor | 4.7 KΩ |
| 42 | Resistor | 180 Ω |
| 22,23 | Potentiometer | 500 Ω |
| 28 | Condenser | 330 nF |
| 33 | Condenser | 1 nF |
| 38 | Electrolytic condenser | 1 nF |
| 50 | Electrolytic condenser | 4.7 nF |
| 44,48 | Semiconductor diode | 1N 4148 |
| 40 | Zener diode | 3.3 V |
| 45 | LED | HP 4655 |
| 41 | Transistor | BC 307 |
| 26,30,51 | Voltage comparator | IC TAA 4761 |
| 34 | SET-RESET flip-flop | IC 4013 |

The advantages of the battery charger described will be clear from the description given.

In particular, it provides for optimum operation of rechargeable batteries by ensuring a full charge each time, at the same time preventing dangerous overcharging regardless of how the charger is operated by the user.

**Claims**

1. A device comprising electric circuits at least in part supplied by a rechargeable battery and including first means (V, 39—42, 45) able to produce a substantially steady current to recharge the battery, second means (V, 21—28, 47, 48, 34) enabling the first means to recharge the battery when the battery charge is lower than a first preset threshold and third means (V, 21—25, 28—30, 34, 47, 48) disabling the first means and thus stopping recharge when the battery charge is higher than a second preset threshold, thereby denoting a completed battery recharge, characterised in that it comprises connection means (46) allowing the battery to be connected to or disconnected from the first means and memory means (21—25, 34, 43, 44, 49—53) arranged to memorise whether, at the moment the battery is disconnected from the first means, the battery recharge was completed or not, and, when the battery is reconnected to the device, to enable the first means if the battery recharge was not completed, even when, at the moment of reconnection, the battery charge is higher than said first preset threshold.

2. A device according to Claim 1, wherein the battery charge is determined by voltage detecting means (1—4, Figure 1; 21—25, Figure 2).

3. A device according to Claim 1, wherein the battery charge is determined by time measuring means.

4. A device according to Claim 1, wherein the memory means include a flip-flop circuit (34).

5. A device according to Claim 4, wherein said flip-flop circuit (34) is a Set-Reset flip-flop arranged to send to said first means (V, 39—42, 45) an enabling signal when it receives a Set signal, and a disabling signal when it receives a Reset signal.

6. A device according to Claim 2 or 3, including a micro-processor, said memory means being part of the micro-processor.

7. A device according to Claims 2 or 3, wherein

6

means (33) are provided sensitive to the reinstatement of the supply voltage (V) supplying the first means after an interruption; said sensitive means (33) being coupled to said memory means (34) so as to enable a recharge cycle when the supply voltage is reinstated.

8. A device according to Claim 1, wherein said first preset threshold is the voltage value for which the battery discharge characteristic begins to decrease appreciably, whereas the said second present threshold is the voltage value for which the battery charge characteristic, after the nominal value has been reached, begins to increase appreciably beyond it.

9. A device according to Claims 5 and 8, wherein a first threshold voltage comparator (26) is provided for sending a Set signal to said flip-flop circuit (34) when the voltage of the battery to be recharged is lower than the first preset threshold.

10. A device according to Claims 5 and 8, wherein a second threshold voltage comparator (30) is provided for sending a Reset signal to said flip-flop circuit (34) when the voltage of the battery to be recharged is over said second preset threshold.

11. A device according to Claim 1, wherein inhibiting means (41, 44, 49—51, 37) are foreseen, which on disconnection of the battery from the device, prevent any change in the content of said memory means (34).

12. A device according to Claim 11, wherein said inhibiting means (41, 44, 49—51, 37) include a third threshold comparator (51) arranged to activate said inhibiting means when the battery charge exceeds a third preset threshold, greater than said second threshold.

13. A device according to Claims 1 and 12, wherein the said first, second and third thresholds are generated by a resistive network (21, 22, 23, 24, 25).

14. A device according to Claim 11, wherein delay means (36, 38) are provided, able to act on said third means (30) causing the interruption of the charging current in order to delay its intervention so as to allow an intervention of said inhibiting means (41, 44, 49, 51, 37) on disconnection of the battery from the device.

15. A device according to Claims 10, 12 and 14 wherein said delay means include a delay circuit (36, 38) coupled between the output of said second threshold voltage comparator (30) and the Reset input of said flip-flop circuit (34); said delay circuit (36, 38) providing a delay greater than the delay produced by said inhibiting means (50).

16. A device according to Claim 15, wherein said inhibiting means include a diode (37) placed on the signal path from the output of said third threshold voltage comparator (51) to the Reset input of said flip-flop circuit (34), said diode (37) being made conductive by the output of said third threshold voltage comparator (51), when the said third preset threshold is exceeded.

17. A device according to Claims 9, 10 and 12, wherein at least one of the said preset voltage thresholds is defined by means of a resistive network (4, 6, 22, 27, 52, 25) capable of producing a positive reaction and a hysteresis on said first input of one of said threshold comparators (5, 26, 51).

18. A device according to Claim 1, wherein manually operable adjustment means (23) are provided, for the adjustment of said second preset threshold so as to allow adaption of the device to batteries having different recharge characteristics.

19. A device according to Claims 13 and 18, wherein said adjustment means include a potentiometer (23) which is part of said resistive network.

20. A device according to Claim 1, wherein control means (41, 42) are provided able to activate, during the period of battery charging, a luminous signalling device (45).

21. A device according to Claim 13, wherein different sets of resistors (42) and resistive dividers (22, 23, 24, 25) are provided, which can be changed over in order to allow recharging batteries having different voltages and/or capacities.

22. A radio-electric signal receiver, characterised in that it includes a device according to one or more of the preceding Claims.

23. An apparatus for the treatment of images and/or sounds, characterised in that it comprises a device according to one or more of Claims 1—21.

24. An appartaus according to claim 23, provided with remote control means including a device according to one or more of Claims 1—21.

25. An apparatus according to claim 24, with a stationary part for the treatment of images and/or sounds including battery recharge means, remote control means supplied by means of rechargeable batteries and electric contact means for coupling said rechargeable batteries to the battery recharge means.

26. A television set, characterised in that it includes a device according to one or more of Claims 1—21.

**Patentansprüche**

1. Vorrichtung mit elektrischen Schaltkreisen, die zumindest teilweise von einer aufladbaren Batterie gespeist werden, umfassend: eine erste Einrichtung (V, 39—42, 45), die in der Lage ist, einem im wesentlichen gleichmäßigen Strom zum Aufladen der Batterie zu erzeugen, eine zweite Einrichtung (V, 21—28, 47, 48, 34), die die erste Einrichtung in die Lage versetzt, die Batterie aufzuladen, wenn die Batterieladung niedriger ist als ein erster voreingestellter Schwellenwert und eine dritte Einrichtung (V, 21—25, 28—30, 34, 47, 48), die die erste Einrichtung sperrt und damit die Aufladung stoppt, wenn die Batterieladung größer ist als ein zweiter voreingestellter Schwellenwert, wodurch eine vollständige Batterieaufladung dargestellt wird, dadurch gekennzeichnet, daß sie aufweist: eine Verbindervorrichtung (46), die ein Anschließen oder Trennen der Batterie von der ersten Einrichtung ermöglicht, und eine Speichereinrichtung (21—25, 34, 43, 44, 49—53), die derart ausgebildet ist, daß sie speichert, ob im Zeitpunkt der Trennung der Batterie von der ersten Einrichtung die Batterieaufladung abgeschlossen war oder nicht, und, wenn die Batterie wieder an die Vorrichtung angeschlossen wird, die erste Einrichtung aktiviert, falls die Batterieaufladung nicht abgeschlossen war, und zwar selbst dann, wenn im Zeitpunkt des Wiederanschließens die Batterieladung höher ist als der erste voreingestellt Schwellenwert.

2. Vorrichtung nach Anspruch 1, dadurch gekennzeichnet, daß die Batterieladung durch eine Spannungsdetektoreinrichtung (1—4, Fig. 1; 21—25, Fig. 2) bestimmt wird.

3. Vorrichtung nach Anspruch 1, dadurch gekennzeichnet, daß die Batterieaufladung durch eine Zeitmeßeinrichtung bestimmt wird.

4. Vorrichtung nach Anspruch 1, dadurch gekennzeichnet, daß die Speichereinrichtung eine Flipflop-Schaltung (34) enthält.

5. Vorrichtung nach Anspruch 4, dadurch gekennzeichnet, daß die Flipflop-Schaltung (34) ein Setz-Rücksetz-Flipflop ist, das an die erste Einrichtung (V, 39—42, 45) ein Aktivierungssignal sendet, wenn es ein Setz-Signal empfängt, und das ein Sperrsignal liefert, wenn es ein Rücksetz-Signal empfängt.

6. Vorrichtung nach Anspruch 2 oder 3, gekennzeichnet durch einen Mikroprozessor, wobei die Speichereinrichtung Teil des Mikroprozessors ist.

7. Vorrichtung nach Anspruch 2 oder 3, dadurch gekennzeichnet, daß eine Fühleinrichtung (33) vorgesehen ist, die auf das erneute Anliegen der die erste Einrichtung speisenden Speisespannung (V) nach einer Unterbrechung anspricht, und daß die Fühleinrichtung (33) an die Speichereinrichtung (34) gekoppelt ist, um bei erneutem Anliegen der Speisespannung einen Aufladezyklus zu ermöglichen.

8. Vorrichtung nach Anspruch 1, dadurch gekennzeichnet, daß der erste voreingestellte Schwellenwert ein Spannungswert ist, bei dem die Batterie-Entladekennlinie nennenswert abzunehmen beginnt, während der zweite voreingestellte Schwellenwert derjenige Spannungswert ist, bei dem die Batterie-Ladekennlinie nach Erreichen des Nennwerts beginnt, spürbar über diesen hinaus anzusteigen.

9. Vorrichtung nach Anspruch 5 und 8, dadurch gekennzeichnet, daß ein erster Schwellenwert-Vergleicher (26) vorgesehen ist, der an die Flipflop-Schaltung (34) ein Setz-Signal sendet, wenn die Spannung der aufzuladenden Batterie niedriger ist als der erste voreingestellte Schwellenwert.

10. Vorrichtung nach Anspruch 5 und 8, dadurch gekennzeichnet, daß ein zweiter Schwellenspannungs-Vergleicher (30) vorgesehen ist, der an die Flipflop-Schaltung (34) ein Rücksetz-Signal sendet, wenn die Spannung der aufzuladenden Batterie über dem zweiten voreingestellten Schwellenwert liegt.

11. Vorrichtung nach Anspruch 1, dadurch gekennzeichnet, daß Sperrmittel (41, 44, 49—51, 37) vorgesehen sind, die bei Trennung der Batterie von der Vorrichtung jegliche Änderung des Inhalts der Speichereinrichtung (34) verhindern.

12. Vorrichtung nach Anspruch 11, dadurch gekennzeichnet, daß die Sperrmittel (41, 44, 49—52, 37) einen dritten Schwellenwert-Vergleicher (51) enthalten, welcher so ausgebildet ist, daß er die Sperrmittel aktiviert, wenn die Batterieladung einen dritten voreingestellten Schwellenwert übersteigt, der größer ist als der zweite Schwellenwert.

13. Vorrichtung nach den Ansprüchen 1 und 12, dadurch gekennzeichnet, daß der erste, der zweite und der dritte Schwellenwert von einem Widerstandsnetzwerk (21, 22, 23, 24, 25) erzeugt werden.

14. Vorrichtung nach Anspruch 11, dadurch gekennzeichnet, daß eine Verzögerungseinrichtung (36, 38) vorgesehen ist, die in der Lage ist, auf die die Unterbrechung des Ladestroms verursachende dritte Einrichtung (30) einzuwirken, um deren Wirksamwerden zu verzögern, damit ein Wirksamwerden der Sperrmittel (41, 44, 49, 51, 37) bei Trennung der Batterie von der Vorrichtung ermöglicht wird.

15. Vorrichtung nach den Ansprüchen 10, 12 und 14, dadurch gekennzeichnet, daß die Verzögerungseinrichtung eine Verzögerungsschaltung (36, 38) enthält, die zwischen den Ausgang des zweiten Schwellenspannungs-Vergleichers (30) und den Rücksetz-Eingang der Flipflop-Schaltung (34) gekoppelt ist, und daß die Verzögerungsschaltung (36, 38) eine Verzögerung, die größer ist als die von den Sperrmitteln (50) verursachte Verzögerung.

16. Vorrichtung nach Anspruch 15, dadurch gekennzeichnet, daß die Sperrmittel eines Diode (37) umfassen, die in dem Signalweg vom Ausgang des dritten Schwellenspannungs-Vergleichers (51) zu dem Rücksetz-Eingang der Flipflop-Schaltung (34) angeordnet ist, wobei die Diode (37) vom Ausgangssignal des dritten Schwellenspannungs-Vergleichers (51) leitend gemacht wird, wenn der dritte voreingestellte Schwellenwert überschritten wird.

17. Vorrichtung nach den Ansprüchen 9, 10 und 12, dadurch gekennzeichnet, daß mindestens einer der voreingestellen Spannungsschwellenwert durch ein Widerstandsnetzwerk (4, 6, 22, 27, 52, 25) definiert wird, das in der Lage ist, an dem ersten Eingang eines der Schwellenwertvergleiche (5, 26, 52) eine positive Reaktion und eine Hysteresis zu erzeugen.

18. Vorrichtung nach Anspruch 1, dadurch gekennzeichnet, daß von Hand betätigbare Einstellmittel (23) vorgesehen sind, zum Einstellen des zweiten voreingestellten Schwellenwerts derart, daß eine Anpassung der Vorrichtung an Batterien mit unterschiedlichen Aufladekennlinien möglich ist.

19. Vorrichtung nach den Ansprüchen 13 und 18, dadurch gekennzeichnet, daß die Einstellmittel ein Potentiometer (23) enthalten, welches Teil des Widerstandsnetzwerks ist.

20. Vorrichtung nach Anspruch 1, dadurch gekennzeichnet, daß eine Steuereinrichtung (41, 42) vorgesehen ist, die während des Zeitraums der Batterieaufladung eine Leuchtanzeigeeinrichtung (45) zu aktivieren vermag.

21. Vorrichtung nach Anspruch 13, dadurch gekennzeichnet, daß unterschliedliche Sätze von Widerständen (42) und Widerstands-Teilern (22, 23, 24, 25) vorgesehen sind, die umschaltbar sind, um ein Aufladen von Batterien mit unterschliedlichen Spannungen und/oder Kapazitäten zu ermöglichen.

22. Elektrischer Funksignalempfänger, dadurch gekennzeichnet, daß er eine Vorrichtung nach einem oder mehreren der vorausgehenden Ansprüche enthält.

23. Gerät zur Verarbeitung von Bild und/oder Ton, dadurch gekennzeichnet, daß es eine Vorrichtung nach einem oder mehreren der Ansprüche 1 bis 21 enthält.

24. Gerät nach Anspruch 23, gekennzeichnet durch eine Fernsteuereinrichtung, die eine Vorrichtung nach einem oder mehreren der Ansprüche 1 bis 21 enthält.

25. Gerät nach Anspruch 24, gekennzeichnet durch einen stationären Teil zur Verarbeitung von Bild und/oder Ton in einer Batterie-Aufladeeinrichtung, eine Fernsteuereinrichtung, die von aufladbaren Batterien gespeist wird, und eine elektrische Kontaktanordnung zum Ankoppeln der aufladbaren Batterien an die Batterie-Aufladeeinrichtung.

26. Fernsehgerät, dadurch gekennzeichnet, daß es eine Vorrichtung nach einem oder mehreren der Ansprüche 1 bis 21 enthält.

**Revendications**

1. Dispositif comprenant des circuits électriques alimentés au moins en partie par une batterie rechargeable et incluant in premier moyen (V, 39—42, 45) agencé pour produire un courant essentiellement régulier en vue de recharger la batterie, un deuxième moyen (V, 21—28, 47, 48, 34) validant le premier moyen pour recharger la batterie quand la charge de batterie est inférieure à un premier seuil préréglé et un troisième moyen (V, 21—25, 28—30, 34, 47, 48) invalidant le premier moyen et arrêtant ainsi une recharge quand la charge de batterie est supérieure à un second seuil préréglé, ce qui indique une recharge de batterie terminée, caractérisé en ce qu'il comprend un moyen de connexion (46) permettant de connecter ou déconnecter la batterie du premier moyen et une mémoire (21—25, 34, 43, 44, 49—53) agencée pour mémoriser les informations indiquant si, au moment où la batterie est déconnectée du premier moyen, la recharge de batterie était terminée ou non, et, quand la batterie est reconnectée au dispositif, pour valider le premier moyen si la recharge de batterie n'était pas terminée, même quand, au moment d'une reconnexion, la charge de batterie est supérieure au premier seuil préréglé.

2. Dispositif selon la revendication 1, dans lequel la charge de batterie est déterminée par un moyen de détection de tension (1—4, Figure 1; 21—25, Figure 2).

3. Dispositif selon la revendication 1, dans lequel la charge de batterie est déterminée par un moyen pour mesurer le temps.

4. Dispositif selon la revendication 1, dans lequel la mémoire comprend un circuit à bascule (34).

5. Dispositif selon la revendication 4, dans lequel le circuit à bascule (34) est une bascule à mise à un-remise à zéro agencée pour envoyer au premier moyen (V, 39—42, 45) un signal de validation quand elle reçoit un signal de mise à un, et un signal d'invalidation quand elle reçoit un signal de remise à zéro.

6. Dispositif selon l'une quelconque des revendications 2 et 3, incluant un microprocesseur, la mémoire faisant partie du microprocesseur.

7. Dispositif selon l'une quelconque des revendications 2 et 3, dans lequel un moyen (33) est prévu qui est sensible au rétablissement de la tension d'alimentation (V) alimentant le premier moyens après une interruption; ce moyen sensible (33) étant couplé à la mémoire (34) de manière à valider un cycle de recharge quand la tension d'alimentation est rétablie.

8. Dispositif selon la revendication 1, dans lequel le premier seuil préréglé est la valeur de tension pour laquelle la caractéristique de décharge de batterie commence à diminuer sensiblement, alors que le second seuil préréglé est la valeur de tension pour laquelle la caractéristique de charge de batterie commence à augmenter sensiblement au-delà de la valeur nominale, après que cette valeur ait été atteinte.

9. Dispositif selon l'une quelconque des revendications 5 et 8, dans lequel un premier comparateur de tensions de seuil (26) est prévu pour envoyer un signal de mise à un au circuit à bascule (34) quand la tension de la batterie à recharger est inférieure au premier seuil préréglé.

10. Dispositif selon l'une quelconque des revendications 5 et 8, dans lequel un deuxième comparateur de tensions de seuil (30) est prévu pour envoyer un signal de remise à zéro au circuit à bascule (34) quand la tension de la batterie à recharger est supérieure au second seuil préréglé.

11. Dispositif selon la revendication 1, dans lequel des moyens d'interdiction (41, 44, 49—51, 37) sont prévus qui empêchent tout changement du contenu de la mémoire (34) quand la batterie est déconnectée du dispositif.

12. Dispositif selon la revendication 11, dans lequel les moyens d'interdiction (41, 44, 49—51, 37) comprennent un troisième comparateur de seuils (51) agencé pour rendre actifs les moyens d'interdiction quand la charge de batterie dépasse un troisième seuil préréglé, supérieur au deuxième seuil préréglé.

13. Dispositif selon l'une quelconque des revendications 1 et 12, dans lequel les premier, deuxième et troisième seuils sont engendrés par un réseau de résistances (21, 22, 23, 24, 25).

14. Dispositif selon la revendication 11, dans lequel des moyens à retard (36, 38) sont prévus qui sont agencés pour agir sur le troisième moyen (30) en provoquant l'interruption du courant de charge afin de retarder son intervention de manière à permettre une intervention des moyens d'interdiction (41, 44, 49, 51, 37) quand la batterie est déconnectée du dispositif.

15. Dispositif selon l'une quelconque des revendications 10, 12 et 14, dans lequel les moyens à retard comprennent un circuit à retard (36, 38) couplé entre la sortie du deuxième comparateur de tensions de seuil (30) et l'entrée de remise à zéro du circuit à bascule (34); le circuit à retard (36, 38) fournissant un retard supérieur au retard produit par les moyens d'interdiction (50).

16. Dispositif selon la revendication 15, dans lequel les moyens d'interdiction comprennent une diode (37) placée sur le chemin de signal de la sortie du troisième comparateur de tensions de seuil (51) à l'entrée de remise à zéro du circuit à bascule (34), la diode (37) étant rendue conductrice par le signal de sortie du troisième comparateur de tensions de seuil (51), quand le troisième seuil préréglé est dépassé.

17. Dispositif selon l'une quelconque des revendications 9, 10 et 12, dans lequel au moins un des seuils de tension préréglés est défini au moyen d'un réseau de résistances (4, 6, 22, 27, 52, 25) agencé pour produire une réaction positive et une hystérésis à la première entrée d'un des comparateurs de seuils (5, 26, 51).

18. Dispositif selon la revendication 1, dans lequel un moyen de réglage pouvant être actionné manuellement (23) est prévu, pour le réglage du deuxième seuil préréglé de manière à permettre une adaptation du dispositif à des batteries ayant des caractéristiques de recharge différentes.

19. Dispositif selon l'une quelconque des revendications 13 et 18, dans lequel le moyen de réglage comprend un potentiomètre (23) qui fait partie du réseau de résistances.

20. Dispositif selon la revendication 1, dans lequel des moyens de commande (41, 42) sont prévus qui sont agencés pour rendre actif un dispositif d'avertissement lumineux pendant la période d'une charge de batterie.

21. Dispositif selon la revendication 13, dans lequel différents groupes de résistances (42) et de diviseurs à résistances (22, 23, 24, 25) sont prévus, qui peuvent être remplacés afin de permettre une recharge de batteries ayant différentes tensions et/ou capacités.

22. Récepteur de signaux radio-électriques, caractérisé en ce qu'il comprend un dispositif selon l'une ou plusieurs des revendications 1 à 21.

23. Appareil pour le traitement d'images et/ou de sons, caractérisé en ce qu'il comprend un dispositif selon l'une ou plusieurs des revendications 1 à 21.

24. Appareil selon la revendication 23, prévu avec un moyen de commande à distance incluant un dispositif selon l'une ou plusieurs des revendications 1 à 21.

25. Appareil selon la revendication 24, avec une partie fixe pour le traitement d'images et/ou de sons incluant un moyen de recharge de batterie, un moyen de commande à distance alimenté au moyen de batteries rechargeables et un moyen de contact électrique pour coupler les batteries rechargeables au moyen de recharge de batterie.

26. Téléviseur, caractérisé en ce qu'il comprend un dispositif selon l'une ou plusieurs des revendications 1 à 21.

## FIG. 1

## FIG. 2

1

FIG. 3